# EUROPÄISCHE PATENTANMELDUNG

(11) **EP 1 046 987 A2**
(43) Veröffentlichungstag der Anmeldung: **25.10.2000**
(21) Anmeldenummer: 00107644.7
(22) Anmeldetag: 08.04.2000
(51) Int. Cl.: G06F 9/445

(54) **Speicherbauteil einer Rechnereinheit**

(30) Priorität: 21.04.1999 DE 19917940
(71) Anmelder: ROBERT BOSCH GMBH, 70442 Stuttgart (DE)
(72) Erfinder: Moessner, Claus, 75228 Ispringen (DE)

(57) **Zusammenfassung**

Die Erfindung betrifft ein Speicherbauteil (3) einer Rechnereinheit (1), mit einem programmierbaren Speicherbereich (5) und einem Bootbereich (6) mit mindestens einem Bootblock (7; 8), aus dem sich ein Prozessor (2) der Rechnereinheit (1) Initialisierungssoftware zum Starten der Rechnereinheit (1) und/oder Programmierungssoftware zum Programmieren des Speicherbereichs (5) lädt. Um auf einen Nur-Lese-Speicher des Speicherbauteils (3) zum Speichern einer Checkroutine und um auf ein Durchlaufen der Checkroutine bei jedem Starten der Rechnereinheit (1) verzichten zu können, schlägt die Erfindung vor, daß das Speicherbauteil (3) mindestens zwei Bootblöcke (7, 8) und eine Konfigurationszelle (9) aufweist, die auf einen der Bootblöcke (7; 8) aktiviert, wobei der Prozessor (2) die Initialisierungssoftware bzw. die Programmierungssoftware automatisch aus dem aktivierten Bootblock (7; 8) lädt.

## Beschreibung

Die vorliegende Erfindung betrifft ein Speicherbauteil einer Rechnereinheit, mit einem programmierbaren Speicherbereich und einem Bootbereich mit mindestens einem Bootblock, aus dem sich ein Prozessor der Rechnereinheit Initialisierungssoftware zum Starten der Rechnereinheit und/oder Programmierungssoftware zum Programmieren des Speicherbereichs lädt.

Die Erfindung betrifft außerdem ein Verfahren zum Umprogrammieren eines Bootbereichs eines Speicherbauteils.

Schließlich betrifft die vorliegende Erfindung eine Rechnereinheit mit mindestens einem Prozessor und mindestens einem Speicherbauteil, das einen programmierbaren Speicherbereich und einen Bootbereich mit mindestens einem Bootblock aufweist, aus dem sich der Prozessor Initialisierungssoftware zum Starten der Rechnereinheit und/oder Programmierungssoftware zum Programmieren des Speicherbereichs lädt.

### Stand der Technik

Ein Speicherbauteil und ein Verfahren der eingangs genannten Art ist aus der deutschen Offenlegungsschrift DE 44 32 499 A1 bekannt. Das dort offenbarte Speicherbauteil wird in einer Rechnereinheit eingesetzt, die bspw. als ein Steuergerät für eine Motorsteuerung ausgebildet ist. Der Bootbereich des Speicherbauteils weist zwei Bootblöcke auf. Um bspw. die Motorcharakteristik zu ändern, kann es erforderlich sein, die in dem Bootbereich des Speicherbauteils enthaltene Initialisierungssoftware zum Starten der Rechnereinheit und/oder Programmierungssoftware zum Programmieren des Speicherbereichs umzuprogrammieren. Zum Umprogrammieren des Bootbereichs wird die neue Initialisierungssoftware bzw. die neue Programmierungssoftware in den weiteren Bootblock des Speicherbauteils gespeichert. Falls während des Speichervorgangs in den weiteren Bootblock ein Fehler auftritt und die neue Initialisierungssoftware bzw. die neue Programmierungssoftware deshalb unlesbar ist, kann die Rechnereinheit immer noch mit der alten Initialisierungssoftware bzw. mit der alten Programmierungssoftware hochgefahren werden, die nach wie vor in dem ersten Bootblock gespeichert ist. Falls der Speichervorgang ohne Probleme abgeschlossen werden konnte, wird die alte Software aus dem ersten Bootblock gelöscht und die Rechnereinheit, diesmal mit der neuen Initialisierungssoftware bzw. mit der neuen Programmierungssoftware, neu hochgefahren.

Das bekannte Speicherbauteil weist neben dem programmierbaren Speicherbereich und dem Bootbereich auch einen Nur-Lese-Speicher (Read-Only-Memory; ROM) auf. In dem Nur-Lese-Speicher des Speicherbauteils ist eine Checkroutine in Form eines kleinen Programms gespeichert, durch das beim Hochfahren der Rechnereinheit ermittelt wird, in welchem der beiden Bootblöcken die Initialisierungssoftware bzw. die Programmierungssoftware fehlerfrei abgespeichert ist. Mit der Software aus dem ermittelten Bootblock wird die Rechnereinheit dann hochgefahren.

Das bekannte Speicherbauteil hat den Nachteil, daß es den erwähnten Nur-Lese-Speicher zum Abspeichern der Checkroutine benötigt. Außerdem muß bei dem bekannten Verfahren vor jedem Hochfahren der Rechnereinheit diese Checkroutine durchlaufen werden, um den Bootblock mit der aktuellen Initialisierungssoftware bzw. Programmierungssoftware zu ermitteln. Dadurch kommt es beim Hochfahren der Rechnereinheit zu einer störenden Verzögerung.

Der vorliegenden Erfindung liegt deshalb die Aufgabe zugrunde, ein Speicherbauteil der eingangs genannten Art dahingehend auszugestalten und weiterzubilden, daß auf den Nur-Lese-Speicher des Speicherbauteils verzichtet werden kann.

Zur Lösung dieser Aufgabe schlägt die Erfindung ausgehend von dem Speicherbauteil der eingangs genannten Art vor, daß das Speicherbauteil mindestens zwei Bootblöcke und eine Konfigurationszelle aufweist, die einen der Bootblöcke aktiviert, wobei der Prozessor die Initialisierungssoftware bzw. die Programmierungssoftware automatisch aus dem aktivierten Bootblock lädt.

Vor dem Hochfahren einer Rechnereinheit mit dem erfindungsgemäßen Speicherbauteil muß nun nicht mehr eine zeitaufwendige Checkroutine durchlaufen werden. Vielmehr wird der aktivierte Bootblock automatisch in dem Bootadressraum gelegt, vorzugsweise durch Hardware direkt auf dem Speicherbauteil.

Durch das erfindungsgemäße Speicherbauteil kann auf einen Nur-Lese-Speicher für die Checkroutine verzichtet werden. Außerdem kann das Hochfahren der Rechnereinheit dank des erfindungsgemäßen Speicherbauteils verzögerungsfrei erfolgen.

Gemäß einer vorteilhaften Weiterbildung der vorliegenden Erfindung wird vorgeschlagen, daß das Speicherbauteil zwei Bootblöcke aufweist.

Gemäß einer bevorzugten Ausführungsform ist die Konfigurationszelle als eine nichtflüchtige, programmierbare und löschbare Zelle ausgebildet. Die Zelle ist bspw. als EEPROM- oder als Flaschzelle ausgebildet und weist mindestens ein Bit Speicherplatz auf. Mehrere Bits je Zelle können z.B. mit einer Mehrheitsentscheidung zusätzlich Sicherheit gegen defekte Bits bieten. Falls die Zelle lediglich ein Bit Speicherplatz aufweist wird durch Setzen dieses Bits auf "1" oder "0" auf den einen oder den anderen Bootblock verwiesen. Abhängig vom Zustand dieses Bit's (Codewortes) blendet das Speicherbauteil den zugehörigen Bootblock in den Bootadressraum ein oder vertauscht einfach die Adressbereiche beider Blöcke.

Es ist eine weitere Aufgabe der vorliegenden Erfindung, ein Verfahren der eingangs genannten Art dahingehend auszugestalten und weiterzubilden, daß auf das Durchlaufen einer zeitaufwendigen Checkroutine vor dem Hochfahren der Rechnereinheit verzichtet werden kann.

Zur Lösung dieser Aufgabe schlägt die Erfindung ausgehend von dem Verfahren zum Umprogrammieren eines Bootbereichs eines Speicherbauteils nach einem der Ansprüche 1 bis 4 ein Verfahren vor, das gekennzeichnet ist durch die nachfolgenden Schritte:
- in einem Ausgangszustand ist ein erster Bootblock des Speicherbauteils mit Initialisierungssoftware zum Starten der Rechnereinheit und/oder Programmierungssoftware zum Programmieren des Speicherbereichs programmiert, und durch eine Konfigurationszelle des Speicherbauteils aktiviert,
- ein weiterer Bootblock des Speicherbauteils wird gelöscht,
- der weitere Bootblock wird mit einer neuen Initialisierungssoftware bzw. einer neuen Programmierungssoftware programmiert, und
- nach Abschluß der Programmierung des weiteren Bootblocks wird durch die Konfigurationszelle auf den weiteren Bootblock umgeschaltet.

Mit dem erfindungsgemäßen Verfahren kann der Bootbereich eines Speicherbauteils umprogrammiert werden, ohne Gefahr zu laufen, daß die Rechnereinheit nicht mehr hochgefahren werden kann, falls während des Umprogrammierungsvorgangs ein Fehler auftritt. Der Bootbereich des Speicherbauteils weist mindestens zwei Bootblöcke auf, die getrennt voneinander mit Initialisierungssoftware bzw. mit Programmierungssoftware programmiert werden können.

Im Ausgangszustand befindet sich die Initialisierungssoftware bzw. die Programmierungssoftware in einem ersten Bootblock des Speicherbauteils. Die Rechnereinheit wird mit der Initialisierungssoftware bzw. der Programmierungssoftware aus diesem Bootblock hochgefahren. Soll der Bootbereich der Rechnereinheit umprogrammiert werden, wird zunächst ein weiterer Bootblock des Speicherbauteils gelöscht. Der gelöschte Bootblock wird dann mit der neuen Initialisierungssoftware bzw. der neuen Programmierungssoftware programmiert. Erst wenn der Umprogrammierungsvorgang ohne Fehler abgeschlossen ist, wird die Konfigurationszelle umgeschaltet, damit die Rechnereinheit in Zukunft mit der neuen Initialisierungssoftware bzw. der neuen Programmierungssoftware aus dem weiteren Bootblock hoch. Der erste Bootblock kann entweder unmittelbar nach Abschluß des Umprogrammierungsvorgangs oder aber erst unmittelbar vor einer erneuten Umprogrammierung des Bootbereichs gelöscht und somit auch für beliebige andere Software genutzt werden.

Das Speicherbauteil weist außerdem eine Konfigurationszelle auf. Die Konfigurationszelle blendet den jeweils aktiven Bootblock des Speicherbauteils in den Bootadressraum ein. Die Konfigurationszelle wird erst dann umgeschaltet, wenn der Umprogrammierungsvorgang ohne Fehler abgeschlossen ist. Dadurch wird sichergestellt, daß die Konfigurationszelle zu dem Bootblock passt, in dem die Initialisierungssoftware bzw. die Programmierungssoftware fehlerfrei gespeichert ist.

Gemäß einer vorteilhaften Weiterbildung der Erfindung wird vorgeschlagen, daß in der Konfigurationszelle mindestens ein Bit gesetzt wird, wobei eine bestimmte Bitkombination auf einen bestimmten Bootblock verweist.

Schließlich ist es eine Aufgabe der vorliegenden Erfindung, eine Rechnereinheit der eingangs genannten Art dahingehend auszugestalten und weiterzubilden, daß ein verzögerungsfreies Hochfahren der Rechnereinheit ohne das vorherige Durchlaufen einer Checkroutine möglich ist.

Zur Lösung dieser Aufgabe schlägt die Erfindung ausgehend von der Rechnereinheit der eingangs genannten Art vor, daß das Speicherbauteil mindestens zwei Bootblöcke und eine Konfigurationszelle aufweist, die einen der Bootblöcke aktiviert, wobei der Prozessor die Initialisierungssoftware bzw. die Programmierungssoftware automatisch aus dem den aktivierten Bootblock lädt.

Gemäß einer vorteilhaften Weiterbildung der Erfindung wird vorgeschlagen, daß das Speicherbauteil zwei Bootblöcke aufweist.

Gemäß einer bevorzugten Ausführungsform der Erfindung ist die Konfigurationszelle als eine nichtflüssige, programmierbare und löschbare Zelle, bspw. als EEPROM- oder als Flashzelle ausgebildet. Diese Zelle weist vorteilhafterweise mindestens ein Bit Speicherplatz auf.

Ein bevorzugtes Ausführungsbeispiel der vorliegenden Erfindung wird im Folgenden anhand der Zeichnung näher erläutert. Es zeigen:

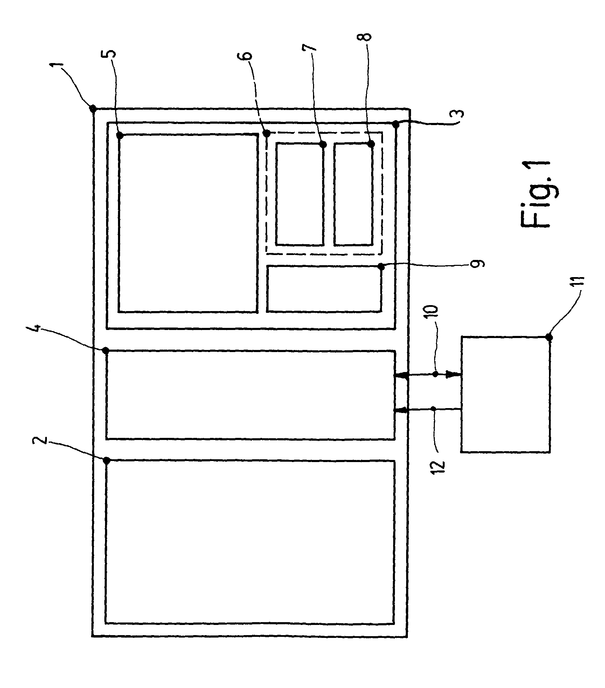

- Fig. 1: eine erfindungsgemäße Rechnereinheit mit einem erfindungsgemäßen Speicherbauteil.

In Fig. 1 ist eine erfindungsgemäße Rechnereinheit in ihrer Gesamtheit mit dem Bezugszeichen 1 gekennzeichnet. Die Rechnereinheit 1 ist bspw. als ein Steuergerät für eine Motorsteuerung ausgebildet. Sie weist einen Prozessor 2 und ein erfindungsgemäßes Speicherbauteil 3 auf. Das Speicherbauteil 3 kann auch Bestandteil des Prozessors 2 sein. Des weiteren weist die Rechnereinheit 1 einen Ein-/Ausgabebereich 4 mit mehreren Ein-/Ausgabe-Schaltkreisen auf.

Das Speicherbauteil 3 weist einen programmierbaren, löschbaren Speicherbereich 5 auf, in dem Rechnerprogramme, z. B. ein Steuerungsprogramm für die Motorsteuerung, gespeichert sind. Außerdem weist das Speicherbauteil 3 einen Bootbereich 6 mit zwei Bootblöcken 7, 8 auf, die getrennt voneinander programmiert werden können. Die Bootblöcke 7, 8 sind als löschbarer, nichtflüchtiger Speicher ausgebildet. In dem Bootbereich 6 ist Initialisierungssoftware zum Starten (dem sog. Hochfahren) der Rechnereinheit 1 und/oder Programmierungssoftware zum Programmieren des Speicherbereichs 5 somit des Bootbereichs 6 gespeichert. Schließlich weist das Speicherbauteil 3 eine Konfigurationszelle 9 auf, die einen der beiden Bootblöcke 7; 8 in den Bootadressraum legt.

Um bspw. die Charakteristik des von der Rechnereinheit 1 gesteuerten Motors zu ändern, kann es erforderlich sein, die in dem Bootbereich 6 des Speicherbauteils 3 enthaltene Initialisierungssoftware bzw. Programmierungssoftware umzuprogrammieren. Beim Umprogrammieren des Bootbereichs 6 muß darauf geachtet werden, daß die Rechnereinheit 1 noch hochgefahren werden kann, selbst wenn während des Umprogrammierungsvorgangs ein Fehler auftritt.

Im Ausgangszustand befindet sich die Initialisierungssoftware bzw. die Programmierungssoftware in dem ersten Bootblock 7 des Speicherbauteils 3. Die Konfigurationszelle 9 verweist auf den ersten Bootblock 7. Die Rechnereinheit 1 wird mit der Initialisierungssoftware bzw. der Programmierungssoftware aus dem Bootblock 7 hochgefahren. Soll der Bootbereich 6 der Rechnereinheit 1 umprogrammiert werden, wird zunächst der zweite Bootblock 8 des Speicherbauteils 3 gelöscht.

Der gelöschte Bootblock 8 wird dann mit der neuen Initialisierungssoftware bzw. der neuen Programmierungssoftware programmiert. Dazu wird die Rechnereinheit 1 z. B. über eine serielle Übertragungsleitung 10 mit einem Computer 11 verbunden. Über die separate Leitung 12 wird eine Programmierspannung für die Programmierung des Bootbereichs 6 zu der Rechnereinheit 1 eingespeist, falls diese benötigt wird. Nachdem die Rechnereinheit 1 in den Programmiermodus geschaltet wurde, wird die neue Initialisierungssoftware bzw. die neue Programmierungssoftware an die Rechnereinheit 1 übertragen.

Erst wenn der Umprogrammierungsvorgang ohne Fehler abgeschlossen ist, wird der Status der Konfigurationszelle 9 derart geändert, daß die Konfigurationszelle 9 den zweiten Bootblock 8 aktiviert. Ab diesem Zeitpunkt fährt die Rechnereinheit 1 in Zukunft mit der neuen Initialisierungssoftware bzw. der neuen Programmierungssoftware aus dem zweiten Bootblock 8 hoch. Der erste Bootblock 7 kann entweder unmittelbar nach Abschluß des Umprogrammierungsvorgangs oder aber erst unmittelbar vor einer erneuten Umprogrammierung des Bootbereichs 6 gelöscht und für beliebige andere Zwecke verwendet werden.

Die Konfigurationszelle 9 weist dem jeweils aktiven Bootblock 7; 8 des Speicherbauteils 3 den Bootadressraum zu. Die Konfigurationszelle 9 ist vorzugsweise als eine EEPROM- oder Flashzelle mit einem Bit Speicherplatz ausgebildet. Durch Setzen dieses Bits auf "1" oder "0" wird der Bootblock 7 oder der Bootblock 8 in den Bootadressraum gelegt.

## Patentansprüche

1. Speicherbauteil (3) einer Rechnereinheit (1), mit einem programmierbaren Speicherbereich (5) und einem Bootbereich (6) mit mindestens einem Bootblock (7; 8), aus dem sich ein Prozessor (2) der Rechnereinheit (1) Initialisierungssoftware zum Starten der Rechnereinheit (1) und/oder Programmierungssoftware zum Programmieren des Speicherbereichs (5) lädt, **dadurch gekennzeichnet**, daß das Speicherbauteil (3) mindestens zwei Bootblöcke (7, 8) und eine Konfigurationszelle (9) aufweist, die auf einen der Bootblöcke (7; 8) aktiviert, wobei der Prozessor (2) die Initialisierungssoftware bzw. die Programmierungssoftware automatisch aus dem aktivierten Bootblock (7; 8) lädt.

2. Speicherbauteil (3) nach Anspruch 1, dadurch gekennzeichnet, daß das Speicherbauteil (3) zwei Bootblöcke (7, 8) aufweist.

3. Speicherbauteil (3) nach Anspruch 1 oder 2, dadurch gekennzeichnet, daß die Konfigurationszelle (9) als eine nichtflüchtige, programmierbare und löschbare Zelle ausgebidlet ist.

4. Speicherbauteil (3) nach Anspruch 3, dadurch gekennzeichnet, daß die Zelle mindestens ein Bit Speicherplatz aufweist.

5. Verfahren zum Umprogrammieren eines Bootbereichs (6) eines Speicherbauteils (3) nach einem der Ansprüche 1 bis 4, **gekennzeichnet durch** die nachfolgenden Schritte:
- in einem Ausgangszustand ist ein erster Bootblock (7) des Speicherbauteils (3) mit Initialisierungssoftware zum Starten der Rechnereinheit (1) und/oder Programmierungssoftware zum Programmieren des Speicherbereichs (5) programmiert, und durch eine Konfigurationszelle (9) des Speicherbauteils (3) aktiviert,
- ein weiterer Bootblock (8) des Speicherbauteils (3) wird gelöscht,
- der weitere Bootblock (8) wird mit einer neuen Initialisierungssoftware bzw. einer neuen Programmierungssoftware programmiert, und
- nach Abschluß der Programmierung des weiteren Bootblocks (8) wird durch die Konfigurationszelle (9) auf den weiteren Bootblock (8) umgeschaltet.

6. Verfahren nach Anspruch 5, dadurch gekennzeichnet, daß in der Konfigurationszelle (9) mindestens ein Bit gesetzt wird, wobei eine bestimmte Bitkombination auf einen bestimmten Bootblock (7; 8) verweist.

7. Rechnereinheit (1) mit mindestens einem Prozessor (2) und mindestens einem Speicherbauteil (3), das einen programmierbaren Speicherbereich (5) und einen Bootbereich (6) mit mindestens einem Bootblock (7; 8) aufweist, aus dem sich der Prozessor (2) Initialisierungssoftware zum Starten der Rechnereinheit (1) und/oder Programmierungssoftware zum Programmieren des Speicherbereichs (5) lädt, **dadurch gekennzeichnet**, daß das Speicherbauteil (3) mindestens zwei Bootblöcke (7, 8) und eine Konfigurationszelle (9) aufweist, die auf einen der Bootblöcke (7; 8) aktiviert, wobei der Prozessor (2) die Initialisierungssoftware bzw. die Programmierungssoftware automatisch aus dem aktivierten Bootblock (7; 8) lädt.

8. Rechnereinheit (1) nach Anspruch 7, dadurch gekennzeichnet, daß das Speicherbauteil (3) zwei Bootblöcke (7, 8) aufweist.

9. Rechnereinheit (1) nach Anspruch 7 oder 8, dadurch gekennzeichnet, daß die Konfigurationszelle (9) als eine nichtflüchtige, programmierbare und löschbare Zelle ausgebildet ist.

10. Rechnereinheit (1) nach Anspruch 9, dadurch gekennzeichnet, daß die Zelle mindestens ein Bit Speicherplatz aufweist.
